# EUROPÄISCHE PATENTANMELDUNG

(11) **EP 1 112 949 A1**
(43) Veröffentlichungstag der Anmeldung: **04.07.2001**
(21) Anmeldenummer: 00250441.3
(22) Anmeldetag: 18.12.2000
(51) Int. Cl.: B65G 63/00

(54) **Container-Terminal für den Umschlag von Stückgut**

(30) Priorität: 23.12.1999 DE 19963595
(71) Anmelder: Atecs Mannesmann AG, 40213 Düsseldorf (DE)
(72) Erfinder: Ahamdian, Mohammad, Dr.-Ing., 52074 Aachen (DE); Kröll, Joachim, 41363 Jüchen (DE); Nowak, Sylvia, Dipl.-Ing., 41469 Neuss-Norf (DE)
(74) Vertreter: Meissner, Peter E., Dipl.-Ing.

(57) **Zusammenfassung**

Die Erfindung betrifft ein Container-Terminal für den Umschlag von Stückgut in einer Hafenanlage mit mehreren am Kai längsverfahrbaren Containerbrücken und selbstfahrenden Transportfahrzeugen, die die Container auf programmierbaren Fahrspuren automatisiert von und zu einem aus zeilenartigen Lagermodulen bestehenden Lager transportieren, wobei im Bereich der Containerbrücken mehrere Fahrspuren parallel zueinander und quer zu den Längsachsen der Containerbrücken verlaufen. Dabei sind die Fahrspuren im Bereich der Containerbrücken (1) in mindestens eine Zufahrtspur (5, 19), mindestens eine Abfahrtspur (7, 21) und mindestens eine Ladespur (6, 20) für alle Transportfahrzeuge (4) aufgeteilt und die Transportfahrzeuge (4) sind zum Wechseln ihrer Fahrspuren (5, 6, 7, 19, 20, 21) im Bereich der Containerbrücken (1) parallel zu ihrer Längsrichtung querverfahrbar.

## Beschreibung

Die Erfindung betrifft ein Container-Terminal für den Umschlag von Stückgut in einer Hafenanlage mit mehreren am Kai verfahrbaren Containerbrücken und selbstfahrenden Transportfahrzeugen, die die Container auf programmierbaren Fahrspuren automatisiert von und zu einem aus zeilenartigen Lagermodulen bestehenden Lager transportieren, wobei im Bereich der Containerbrücken mehrere Fahrspuren parallel zueinander und quer zu den Längsachsen der Containerbrücken verlaufen. Des weiteren betrifft die Erfindung ein Verfahren zum Containerumschlag in einem solchen Terminal.

Aus einem internen Stand der Technik ist ein Container-Terminal bekannt, bei dem der automatisierte Horizontaltransport von ISO-Containern mittels fahrerloser Transportfahrzeuge, kurz auch FTF oder AGV genannt, in Zusammenwirkung mit sechs Containerbrücken erfolgt, die abschnittweise längs des Kais und längs eines an dem Kai festgemachten Containerschiffs verfahrbar sind. Bei dieser vorbekannten Lösung ist jeder Containerbrücke eine eigene Ladespur zugeteilt, die gleichzeitig auch Fahrspur für das fahrerloser Transportfahrzeug im Bereich der sechs Containerbrücken ist. Die fahrerlosen Transportfahrzeuge passieren somit bei jedem Horizontaltransport alle sechs Containerbrücken auf jeweils einer der zugeordneten Fahrspuren, bevor sie den Ladebereich des Kais in Richtung Containerlager verlassen. Ein Spurwechsel der Transportfahrzeuge ist im Ladebereich nicht vorgesehen. Beim Abbiegen eines fahrerloser Transportfahrzeuges von den lagerseitig am Weitesten entfernten kombinierten Lade- und Fahrspuren in Richtung Lager ist ein Kreuzen der inneren Lade- und Fahrspuren erforderlich.

Die Zuordnung je einer anderen Lade- und Fahrspur für jede Containerbrücke bedeutet eine große Zahl von Leerfahrten der fahrerlosen Transportfahrzeuge über lange Strecken mit entsprechend reduzierter Transportleistung. Die Kaifläche kann nicht optimal genutzt werden, weil ein Großteil der bereitgestellten, zu befahrenden Breite des Kais nur in geringem Maß durch die Fahrzeuge genutzt wird. Um eine hohe Transportleistung zu erzielen, muß eine große Zahl von fahrerlosen Transportfahrzeugen bereitgestellt werden, was entsprechend hohe Investitions-, Wartungs- und Instandhaltungskosten bedeutet. Außerdem gestaltet sich der am Ende der Kaianlage notwendige Spurwechsel der abbiegenden Fahrzeuge oftmals problematisch, weil die automatische Navigation der auf den kombinierten Lade-Fahrspuren vorhandenen Fahrzeuge entsprechend abgestimmt werden muss.

Aufgabe der vorliegenden Erfindung ist es, ausgehend von den beschriebenen Problemen und Nachteilen des Standes der Technik, ein Container-Terminal der gattungsgemäßen Art so zu gestalten, dass bei verbesserter Nutzung der Kaiflächen weniger Leerfahrten der Transportfahrzeuge über lange Strecken erforderlich sind und damit die Leistung des Container-Terminals erhöht wird.

Zur Lösung der Aufgabe wird erfindungsgemäß vorgeschlagen, dass die Fahrspuren im Bereich der Containerbrücken in mindestens eine Zufahrtsspur, mindestens eine Abfahrtsspur und mindestens eine Ladespur für alle Transportfahrzeuge aufgeteilt sind und die Transportfahrzeuge zum Wechseln ihrer Fahrspuren im Bereich der Containerbrücken parallel zu ihrer Längsrichtung quer verfahrbar sind.

In Abkehr von der bekannten Lösung wird erfindungsgemäß die Ladespur von den Zufahrtsspuren und Abfahrtsspuren getrennt. Die für alle Fahrzeuge gemeinsame Ladespur wird durch Querverfahren der Transportfahrzeuge angefahren, wobei die Transportfahrzeuge auf einer oder mehreren der Zufahrtsspuren gepuffert werden können. Die beladenen Transportfahrzeuge können durch Querverfahren von der Ladespur auf eine der Abfahrtsspuren navigiert werden und dort an zu beladenden, auf der Ladespur stehenden Transportfahrzeugen vorbei in den Lagerbereich transportiert werden. Dadurch lassen sich kurze Wege und geringe Leerfahrten erzielen, die die Transportleistung des Terminals deutlich erhöhen, ohne zusätzliche Fahrzeuge einsetzen zu müssen.

Vorzugsweise sind erfindungsgemäß zwei Zufahrtsspuren, zwei Abfahrtsspuren und eine Ladespur vorgesehen, wobei die Ladespur zwischen den Zufahrtsspuren und den Abfahrtsspuren liegt. Durch Anordnung der Ladespur zwischen den Zufahrt- und Abfahrtsspuren lässt sich ein Kreuzen von Zufahrts- und Abfahrtsspuren verhindern. Das vereinfacht die Logistik der Anlage und dient letztlich auch der Erhöhung der Transportleistung.

Vorzugsweise erfolgt das Querverfahren der Transportfahrzeuge zum Spurwechsel in einem Winkel von vorzugsweise 30°. Dazu werden die Räder der vorderen und hinteren Achse der Transportfahrzeuge im gleichen Winkel schräg gestellt, so dass das Fahrzeug, wie im Krebsgang, quer zu sich selbst verfährt. Der Platzbedarf für ein Querverfahren auf diese beschriebene Weise ist erheblich geringer, als wenn das Fahrzeug in Kurvenfahrt die Spur wechseln müsste. Dadurch wird die Behinderung anderer, auf parallelen Spuren fahrender Fahrzeuge deutlich reduziert.

Es ist nach einem anderen Merkmal der Erfindung auch denkbar, bei entsprechend ausgestatteten Fahrzeugen (z.B. Achsen mit Drehschemel) die Räder quer zur Längsachse des Fahrzeuges einzustellen und in Querrichtung in einem Winkel von vorzugsweise 90° zu verfahren.

Die Erfindung beansprucht weiterhin ein Arbeitsverfahren zum Containerumschlag, das dadurch gekennzeichnet ist, dass während des Containerumschlags im Ladebereich der Containerbrücken alle Transportfahrzeuge logistisch zum Abtransport der Container zur Verfügung stehen und bei Bedarf einzelne Transportfahrzeuge aus der oder den als Puffer dienenden Zufahrtspur(en) durch Querverfahren parallel zu ihrer Längsrichtung zur Ladespur einer Containerbrücke navigiert werden.

Durch Anordnung einer definierten Ladespur für alle an einem Containerschiff eingesetzten Containerbrücken stehen während der Schiffsentladung bei der Einfahrt der leeren fahrerlosen Transportfahrzeuge in den Ladebereich der Containerbrücke noch alle Transportfahrzeuge auf den als Pufferspur dienende Zufahrtspur zum Abtransport der Container zur Verfügung. Während der Schiffsbeladung navigieren die Transportfahrzeuge aus den Pufferspuren in die Ladespur zu einer logistisch zugewiesenen Containerbrücke. Dabei kann die erste Containerbrücke nach der Einfahrt in den Ladebereich erfindungsgemäß von dem fahrerloser Transportfahrzeuge direkt angesteuert werden.

Weil nach der Erfindung die Transportfahrzeuge nach Abschluss des Ladevorganges durch Querverfahren parallel zu ihrer Längsrichtung von der Ladespur auf eine der Abfahrtspuren navigiert werden, werden benachbarte Fahrspuren auch bei einem Minimalabstand der Fahrspuren durch den Lenkvorgang nicht behindert. Der krebsgangartige Spurwechsel eines fahrerlosen Transportfahrzeuges in die nächste und übernächste Fahrspur weist stets einen kürzeren zurückgelegten Weg in Längsrichtung auf, als dies beim S-Kurvenfahrt-Spurwechsel möglich ist. Selbst bei dicht stehenden Containerbrücken kann der Ladebereich einer jeden Brücke unbeeinflusst von der Zu- und Abfahrt der fahrerlosen Transportfahrzeuge gehalten werden.

Ein Ausführungsbeispiel der Erfindung ist in der Zeichnung dargestellt und wird nachfolgend beschrieben. Es zeigt:
- Figur 1: die Seitenansicht einer Containerbrücke bei der Schiffsentladung,
- Figur 2: eine Draufsicht auf den Ladebereich eines erfindungsgemäßen Containerterminals,
- Figur 3: eine Detailansicht aus Figur 2 (einfacher Spurwechsel),

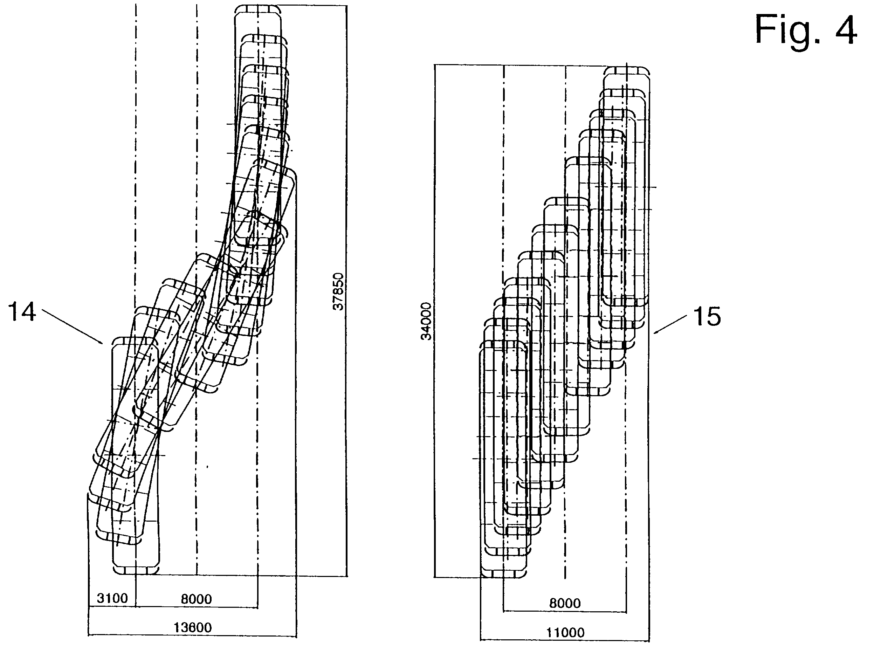

- Figur 4: eine Detailansicht aus Figur 2 (doppelter Spurwechsel), und
- Figur 5: die Draufsicht auf den Ladebereich eines anderen Container-Terminals.

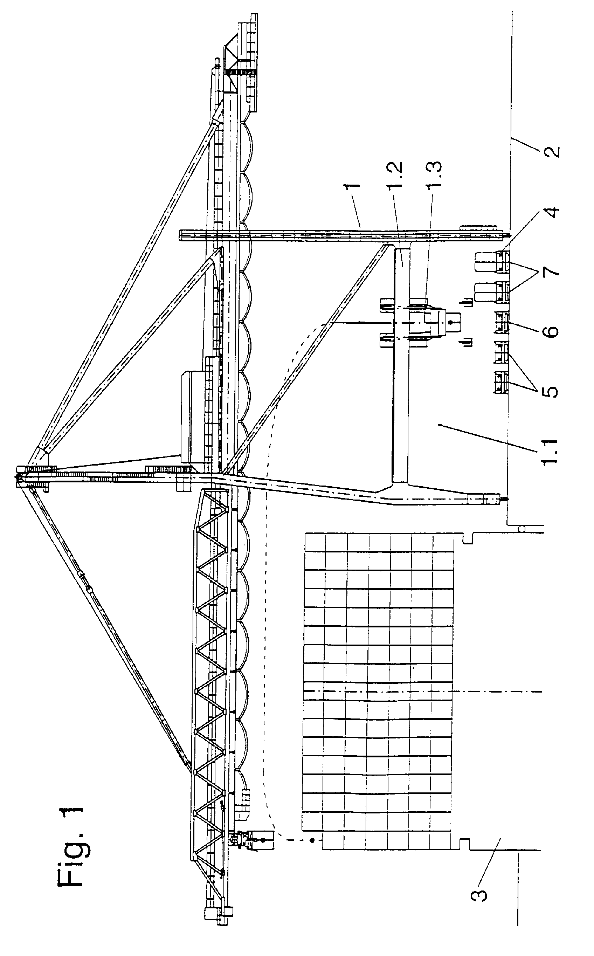

In Figur 1 ist mit 1 eine Containerbrücke bezeichnet, die auf dem Kai 2 quer zur Zeichnungsebene verfahrbar ist. Am Kai ist das Containerschiff 3 festgemacht. Oberhalb des Brückenportals 1.1 ist am Träger 1.2 eine automatisierte Hubeinrichtung 1.3 gelagert, die die Be- und Entladung der fahrerlosen Transportfahrzeuge 4 übernimmt. Für die fahrerlosen Transportfahrzeuge (im folgenden kurz mit "FTF" bezeichnet) sind innerhalb des Brückenportals 1.1 zwei Zufahrtsspuren 5 vorgesehen, die auch als Pufferspuren bezeichnet werden können. Parallel dazu sind zwei Ausfahrtspuren 7 vorgesehen. Zwischen den beiden Zufahrtsspuren und den beiden Ausfahrtsspuren 7 ist die Ladespur 6 vorgesehen.

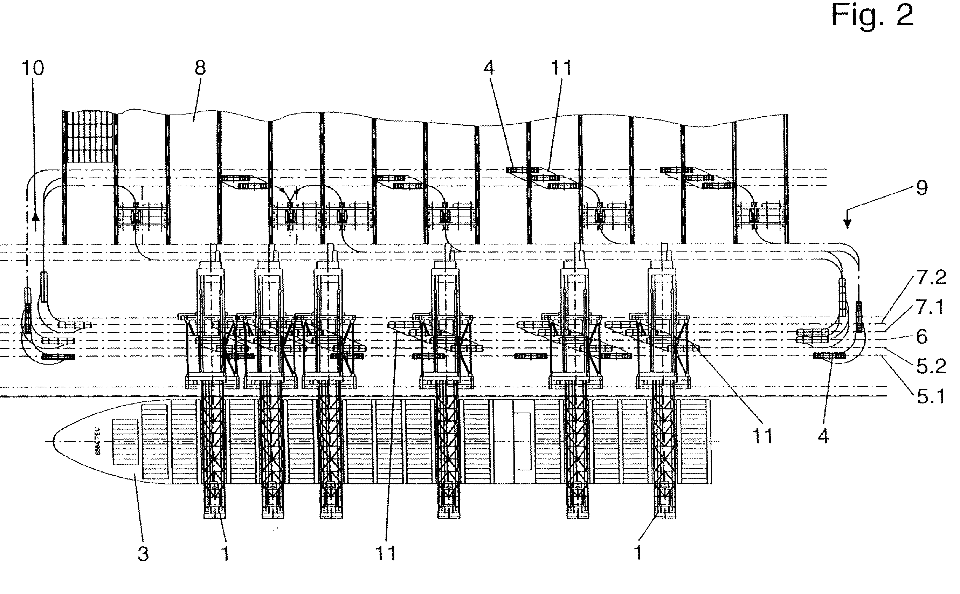

In Figur 2 sind in einer Draufsicht auf den Ladebereich des Container-Terminals sechs Containerbrücken 1 neben einem Containerschiff 3 dargestellt. Mit 5.1 und 5.2 sind zwei Zufahrtsspuren (oder Pufferspuren) für die FTF bezeichnet, die Ladespur ist mit 6 beziffert und liegt zwischen den Zufahrtsspuren 5.1 und 5.2 und den äußeren Ausfahrtspuren 7.1 und 7.2. Das Containerlager ist mit 8 bezeichnet.

Die Fahrtrichtung für die Einfahrt 9 und die Ausfahrt 10 im Ladebereich wird entsprechend der Terminallogistik bestimmt; der eigentliche Ladevorgang findet jeweils im Schnittpunkt der Ladespur mit den Längsachsen der Containerbrücken statt. Mit 11 ist in Figur 2 die Hüllkurve des Spurwechsels der Transportfahrzeuge bezeichnet, die parallel zu ihrer Längsachse im Winkel von ca. 30° quer verfahrbar sind. Aus Figur 2 wird ersichtlich, dass der Spurwechsel auf einem extrem kurzen Längenabschnitt erfolgen kann, und zwar von der Zufahrtsspur zur Ladespur bzw. von der Ladespur zur Ausfahrtsspur.

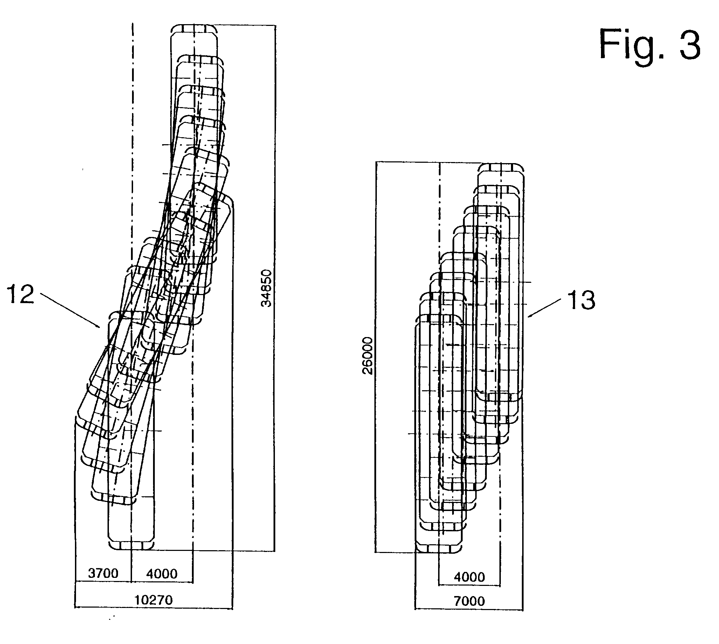

In Figur 3 ist im Detail ein einfacher Spurwechsel in S-Kurvenfahrt 12 und im erfindungsgemäßen Krebsgang 13, basierend auf einem Fahrspurabstand von 4 m dargestellt. Die Darstellung der S-Kurvenfahrt demonstriert deutlich die Behinderung der benachbarten Fahrspuren durch das Ausscheren und die längere Strecke bis zur Parallelausrichtung des FTF. In der rechten Zeichnungshälfte ist der Spurwechsel nach der Erfindung dargestellt, erkennbar ist dieser nicht nur auf einer kürzeren Strecke möglich; auch die Behinderung der benachbarten Fahrspuren entfällt.

Das gleiche ergibt sich aus der Zeichnungsfigur 4, in der ein doppelter Spurwechsel mit drei Fahrspuren dargestellt ist. Auch hier ist in der linken Zeichnungsdarstellung demonstriert, dass bei S-Kurvenfahrt eine deutliche Behinderung der benachbarten Fahrspuren durch das Ausscheren und die längere Strecke bis zur Parallelausrichtung des FTF erfolgt.

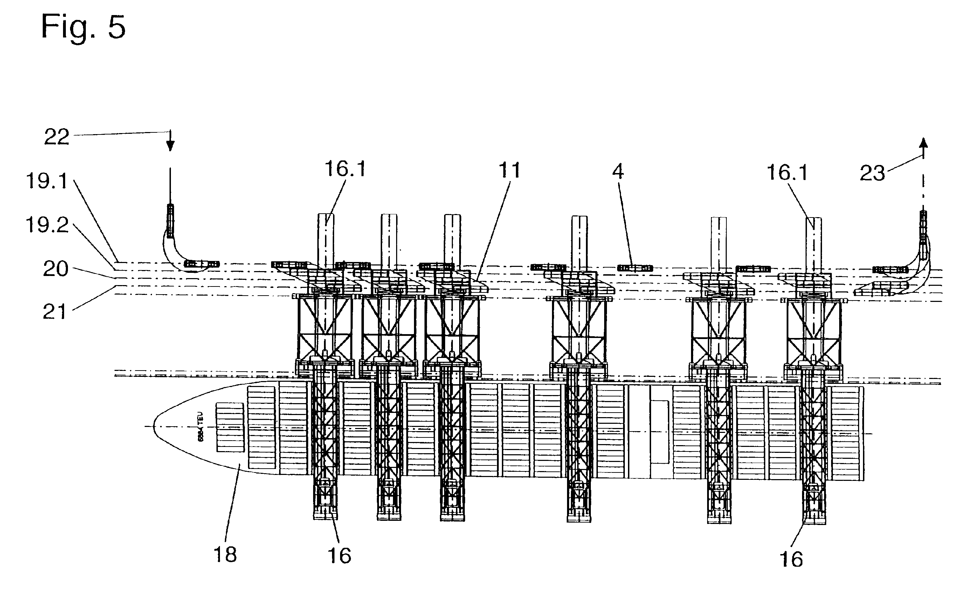

In Figur 5 wird eine weitere Container-Terminalanordnung mit Container-Brücken mit landseitigen Auslegeren in der Draufsicht dargestellt. Sechs Containerbrücken 16 entladen ein Containerschiff 18. Für die FTF 4 sind im Bereich des landseitigen Auslegers 16.1 der Containerbrücken zwei Zufahrtsspuren 19.1 und 19.2 zum Puffern der FTF's vorgesehen, des weiteren ist eine Ladespur 20 sowie eine Ausfahrspur 21 erkennbar. Die Fahrtrichtung für die Einfahrt 22 und die Ausfahrt 23 der Transportfahrzeuge in und aus dem Ladebereich wird entsprechend der Terminallogistik bestimmt. Auch hier findet der Ladevorgang im Schnittpunkt der Ladespur mit den Längsachsen der Containerbrücken statt. Die Hüllkurven des Spurwechsel 11 zeigen den möglichen Bewegungsablauf der FTF.

## Patentansprüche

1. Container-Terminal für den Umschlag von Stückgut in einer Hafenanlage mit mehreren am Kai längsverfahrbaren Containerbrücken und selbstfahrenden Transportfahrzeugen, die die Container auf programmierbaren Fahrspuren automatisiert von und zu einem aus zeilenartigen Lagermodulen bestehenden Lager transportieren, wobei im Bereich der Containerbrücken mehrere Fahrspuren parallel zueinander und quer zu den Längsachsen der Containerbrücken verlaufen
dadurch gekennzeichnet,
dass die Fahrspuren im Bereich der Containerbrücken (1) in mindestens eine Zufahrtspur (5, 19), mindestens eine Abfahrtspur (7, 21) und mindestens eine Ladespur (6, 20) für alle Transportfahrzeuge (4) aufgeteilt sind und die Transportfahrzeuge (4) zum Wechseln ihrer Fahrspuren (5, 6, 7, 19, 20, 21) im Bereich der Containerbrücken (1) parallel zu ihrer Längsrichtung querverfahrbar sind.

2. Container-Terminal nach Anspruch 1,
dadurch gekennzeichnet,
dass vorzugsweise zwei Zufahrtspuren (5, 19), zwei Abfahrtspuren (7, 21) und eine Ladespur (6, 20) vorgesehen ist, wobei die Ladespur (6, 20) zwischen den Zufahrtspuren (5, 19) und den Abfahrtspuren (7, 21) liegt.

3. Container-Terminal nach Anspruch 1 und 2,
dadurch gekennzeichnet,
dass das Querverfahren der Transportfahrzeuge (4) zum Spurwechsel in einem Winkel von vorzugsweise 30° erfolgt.

4. Container-Terminal nach Anspruch 1 und 2,
dadurch gekennzeichnet,
dass das Querverfahren der Transportfahrzeuge (4) zum Spurwechsel in einem Winkel von vorzugsweise 90° erfolgt.

5. Verfahren zum Container-Umschlag in dem Container-Terminal einer Hafenanlage mit mehreren am Kai längsverfahrbaren und selbstfahrenden Transportfahrzeugen, die die Container auf programmierbaren Fahrspuren automatisiert von und zu einem aus zeilenartigen Lagermodulen bestehenden Lager transportieren, wobei im Bereich der Containerbrücken mehrere Fahrspuren parallel zueinander und quer zu den Längsachsen der Containerbrücken verlaufen
dadurch gekennzeichnet,
dass während des Containerumschlags im Ladebereich der Containerbrücken alle Transportfahrzeuge logistisch zum Abtransport der Container zur Verfügung stehen und bei Bedarf einzelne Transportfahrzeuge aus der oder den als Puffer dienenden Zufahrtspur(en) durch Querverfahren parallel zu ihrer Längsrichtung zur Ladespur einer Containerbrücke navigiert werden.

6. Verfahren zum Container-Umschlag nach Anspruch 5,
dadurch gekennzeichnet,
dass mindestens die erste Containerbrücke nach Einfahrt der Fahrzeuge in den Ladebereich direkt auf der Ladespur angesteuert wird.

7. Verfahren zum Container-Umschlag nach Anspruch 5 und 6,
dadurch gekennzeichnet,
dass die Transportfahrzeuge nach Abschluss des Ladevorganges durch Querverfahren parallel zu ihrer Längsrichtung von der Ladespur auf eine der Abfahrtspuren navigiert werden.
